# EUROPEAN PATENT SPECIFICATION

(11) **EP 1 305 608 B1**
(45) Date of publication and mention of the grant of the patent: **07.02.2007**
(21) Application number: 01949723.9
(22) Date of filing: 17.07.2001
(51) Int. Cl.: G01N 21/87

(54) **INSTRUMENT FOR EXAMINING A GEMSTONE**
PRÜFVORRICHTUNG FÜR DIAMANTEN
INSTRUMENT D'ANALYSE DE PIERRES PRECIEUSES

(30) Priority: 18.07.2000 GB 0017639
(43) Date of publication of application: 02.05.2003
(73) Proprietor: GERSAN ESTABLISHMENT, 9490 Vaduz (LI)
(72) Inventor: LAWSON, Simon Craig, Maidenhead, Berkshire SL6 8DN (GB)
(74) Representative: Talbot-Ponsonby, Daniel Frederick
(86) International application number: PCT/GB2001/003196
(87) International publication number: WO 2002/006797

(56) References cited:
- US-A- 4 012 141
- US-A- 4 049 350
- US-A- 5 801 819
- LAWSON S C ET AL: "Spectroscopic study of cobalt-related optical centers in synthetic diamond" JOURNAL OF APPLIED PHYSICS, AMERICAN INSTITUTE OF PHYSICS. NEW YORK, US, vol. 79, no. 8, 15 April 1996 (1996-04-15), pages 4348-4357, XP002159681 ISSN: 0021-8979
- BUERKI P R ET AL: "OBSERVATION OF THE H2 DEFECT IN GEM-QUALITY TYPE IA DIAMOND" DIAMOND AND RELATED MATERIALS, ELSEVIER SCIENCE PUBLISHERS, AMSTERDAM, NL, vol. 8, 1999, pages 1061-1066, XP000980582 ISSN: 0925-9635
- FISHER D ET AL: "SPECTROSCOPIC EVIDENCE OF GE POL HPHT-TREATED NATURAL TYPE IIA DIAMONDS" GEMS AND GEMOLOGY, GEMOLOGICAL INSTITUTE OF AMERICA, LOS ANGELES, CA,, US, vol. 36, no. 1, March 2000 (2000-03), pages 42-49, XP000979981 ISSN: 0016-626X
- COLLINS A T ET AL: "Colour changes produced in natural brown diamonds by high-pressure, high-temperature treatment" DIAMOND AND RELATED MATERIALS, ELSEVIER SCIENCE PUBLISHERS, AMSTERDAM, NL, vol. 9, no. 2, March 2000 (2000-03), pages 113-122, XP004195517 ISSN: 0925-9635
- SMITH C P ET AL: "GE POL DIAMONDS: BEFORE AND AFTER" GEMS AND GEMOLOGY, GEMOLOGICAL INSTITUTE OF AMERICA, LOS ANGELES, CA,, US, vol. 36, no. 3, September 2000 (2000-09), pages 192-215, XP000979984 ISSN: 0016-626X

## Description

### BACKGROUND OF THE INVENTION

The present invention relates to apparatus for examining a gemstone, comprising a thermally-insulated container for containing the gemstone, and having a window; means for cooling the container using a cryogen; a cover for the container; a laser for irradiating the gemstone through a said window; a spectrometer for detecting through a said window photoluminescence spectra emitted by the gemstone and giving corresponding spectral data signals at its output; a blocking filter between the window and the spectrometer, for filtering out radiation at the wavelength of the irradiating radiation; a processor connected to the output of the spectrometer, for analysing the spectral data from the spectrometer, a display connected to the processor, for displaying information regarding the gemstone; and a support structure.

The invention also relates to a method of examining a gemstone, comprising irradiating the gemstone with a laser and detecting photoluminescence spectra emitted by the gemstone and displaying on a display information regarding the gemstone, using an apparatus which comprises a support structure carrying at least the following components: a thermally-insulated container for containing the gemstone, and having at least one window, means for cooling the container using a cryogen, a cover for the container, a laser for irradiating the gemstone through a said window, a spectrometer for detecting through a said window photoluminescence spectra emitted by the gemstone and giving corresponding spectral data signals at its output, a blocking filter between the window and the spectrometer, for filtering out radiation at the wavelength of the irradiating radiation, a processor connected to the output of the spectrometer, for analysing the spectral data from the spectrometer, and a display connected to the processor, for displaying information regarding the gemstone.

A paper by Lawson et al entitled "Spectroscopic Study of Cobalt-Related Optical Centres in Synthetic Diamond", in the Journal of Applied Physics, American Institute of Physics, Volume 79, No. 8, April 1996, pages 4348 to 4357 discloses such an apparatus and such a method, demonstrating that the photoluminescence spectra of a polished gemstone can be produced and analysed in the laboratory. Further laboratory apparatus accomplishing a similar purpose are disclosed in a publication by Adamas Gemological Laboratory under the title "SAS2000 RAMAN Spectra" on their website http://www.gis.net/~adamas/raman.html, and in a paper by Fisher et al entitled "Spectroscopic Evidence of GE POL HPHT-Treated Natural Type IIa Diamonds" in Gems and Gemology, Volume 36, No. 1, Spring 2000, pages 42 to 49. In a paper by Buerki et al entitled "Observation of the H2 Defect in Gem-Quality Type Ia Diamond", Diamond and Related Materials, Volume 8, 1999, pages 1061 to 1066, it appears that similar apparatus is being used.

The use of photoluminescence spectra is a good technique for detecting minor atomic impurities and other defects in a crystal lattice, but is very insensitive at room temperature. If the temperature of the gemstone is reduced to liquid nitrogen temperatures (about -196° C), sensitivity levels can be improved by orders of magnitude in some cases, and such a level of sensitivity may be required in order to detect whether a diamond is synthetic or not or whether certain diamonds have been treated in order to improve their colour. However, providing liquid nitrogen temperatures is a laboratory facility and not available in retail premises. The facility is usually a costly cryostat such as that disclosed in WO 01/33203 A, the Lawson et al paper referred to above and the Buerki et al paper referred to above. A modem commercial cryostat is expected to provide a controlled, pre-selected temperature which is continuously variable at will up to room temperature and beyond. In general, commercially-available cryostats involve evacuating the sample space in order to avoid condensation. Although some liquid nitrogen cryostats can be small, they require gas flow systems and vacuum pumps, adding complexity and requiring time for evacuation. Peltier-cooled and Joule-Thomson cryostats can be small, but they are fragile and expensive; Joule-Thomson cryostats also need high pressure gases in order to operate. In addition, the lasers would normally be gas lasers which are relatively large, cumbersome and expensive. Overall the equipment requires high skill in use.

It is important to be able to determine whether a polished gemstone is an untreated, natural diamond.

It is an object of the present invention to overcome or ameliorate at least one of the disadvantages of the prior art, or to provide a useful alternative.

It is desirable to provide apparatus that can be used by jewellers, which therefore must not require high levels of skill, be relatively inexpensive, be easy to manipulate, and be quick to use, whilst accepting that the apparatus will not be able to detect all categories of diamonds with complete accuracy. The primary aim is to significantly reduce the number of gemstones requiring more intensive and time-consuming examination on more sophisticated equipment.

### THE INVENTION

The present invention provides an instrument as set forth in Claim 1, 2 or 3 and a method as set forth in Claim 42, 43 or 44. The remaining Claims claim preferred and/or optional features of the invention.

It is appreciated that it is possible to make gemstone diamonds synthetically. It is also possible to subject natural diamonds to high-pressure high-temperature (HPHT) treatment, or to subject natural diamonds to irradiation treatment, to increase their value, for instance by enhancing their colour.

The instrument of the invention can be robust, compact, easy and quick to use and relatively inexpensive, and can thus be used by jewellers without the employment of high skill or difficult manipulative actions, although the instrument can also be used in gemmological laboratories.

Unlike conventional cryostats, the instrument of the invention involves neither a vacuum system nor a thermoelectric cooler. It employs a very simple way of avoiding condensation problems. The sample gemstone is immersed directly in a cryogen (i.e. a cryogenic liquid or liquefied gas) and held within a bath of the cryogen in the thermally-insulated container. The size of the container and its thermal insulation can be designed such that cryogen hold times of a few minutes to several tens of minutes can be achieved. In order to prevent condensation forming on the window, the cryogen bath is not allowed to run dry during the measurement period. A cryogen bath can be much smaller, cheaper and quicker to use than a conventional cryostat, and the arrangement can be such that little manipulative skill is required, in particular by using a special holding part for holding the gemstone against the window.

The preferred cryogen is liquid nitrogen as it is readily available and safe to use. However, with proper precautions, liquid oxygen can be used and provides a temperature only about 10° C higher than that of liquid nitrogen. In general, any suitable liquefied gas or gas mixture can be used, provided it has a temperature below about minus 100°, preferably below about minus 120°, more preferably below about minus 150° or about minus 160° C; for detecting HPHT treated stones, the maximum temperature is about minus 100°C.

The invention enables rapid photoluminescence measurements to be made at temperatures lower than minus 100°C. Measurement times may extend from a few seconds to a few tens of seconds. In one example using liquid nitrogen, the instrument can be operated at the rate of fifteen to twenty seconds per sample, topping up the container with liquid nitrogen every fifteen minutes - this compares with fifteen to thirty minutes per sample using conventional laboratory equipment such as that disclosed in WO 01/33203 A. After measurement, the photoluminescence spectra are analysed using the processor, which will have a suitable algorithm, and the result is displayed on the screen. In view of the speedy examination, the instrument of the invention may be particularly useful in gemmological laboratories, which typically examine hundreds of diamonds per day.

The instrument will detect as referrals (i.e. reject) all untreated synthetic diamonds and also HPHT treated natural or synthetic diamonds. However, it will also detect as referrals about 15% to 30% of untreated natural type II diamonds. Nonetheless, the instrument can be very useful in practice, particularly if associated with one or more other instruments for testing gemstones, such as the DiamondSure 1 instrument (as in WO 91/16617) or the DiamondSure 2 instrument (as in WO 91/16617 but modified to make broader spectral measurements). The instrument of the invention is regarded as a predicting or screening instrument, rather than an HPHT treatment detector, the aim of the invention being to significantly reduce the number of stones that required detailed and time-consuming investigation on more sophisticated spectroscopic equipment.

The instrument of the invention is primarily designed to screen for natural type II diamonds that have undergone HPHT treatment in order to reduce their colour. For this application, the diamonds would have been previously screened in order to identify them as both natural and type II, i.e. to reject all that are synthetic or are not type II natural diamonds. Type II diamond is defined as that which exhibits no absorption in the so-called 'defect-induced-one-phonon' region of the infra-red spectrum between 500 and 1500 cm⁻¹. The type may be determined from a measurement of the infra-red spectrum in this region or by use of the DiamondSure 2 instrument. As the DiamondSure2 instrument refers (i.e. rejects) both natural and synthetic type II diamonds, referrals from the DiamondSure 2 instrument are tested in order to determine whether they are synthetic; alternatively standard gemmological techniques may be applied.

The instrument of the invention will also refer all HPHT treated natural type I diamonds (type I is defined as that which exhibits absorption due to nitrogen impurities in the defect-induced-one-phonon region). However a relatively large number of untreated natural type I diamonds will also be referred, so the instrument of the invention is not as efficient in detecting HPHT treatment of natural type I diamond.

If the instrument of the invention is used to detect just irradiation treatment, no pre-screening with other instruments is necessary. All types of diamond have the 741 nm zero phonon line when they have been irradiated.

The instrument of the invention can be programmed merely to indicate whether the gemstone is an untreated natural diamond or not. Thus the instrument can be programmed to classify the gemstones in two categories, namely "pass" (i.e. an indication that the gemstone is an untreated natural diamond which has not been subjected to irradiation treatment or to HPHT treatment), and "refer", and if the "refer" category is indicated, the ratios of relevant spectral features can be given, to aid further sorting. Alternatively, the instrument can be programmed to give considerably more information, such as whether the gemstone is a diamond at all, or is a synthetic diamond or a synthetic diamond/natural diamond doublet (which can be produced by the chemical vapour deposition (CVD) of synthetic diamond on a natural diamond), or is a natural diamond which has been irradiated and/or has undergone HPHT treatment to improve its colour. In this case, the instrument can display one of three possible results, as follows:-
"pass" - no further testing is required and the sample can be taken as natural and untreated;
"refer" - more sophisticated spectroscopic testing will be required since a small percentage of natural untreated type II diamonds also give this result (in addition to all HPHT treated natural and synthetic diamonds);
"refer with a numerical result giving the intensity ratios of certain spectroscopic features" - the numerical result displayed may be sufficient to determine the sample as HPHT treated without the need for more sophisticated spectroscopic measurements (the usefulness of such intensity ratios has been described in e.g. the Fisher et al paper referred to above).

Whilst the instrument will give a "refer" result for all synthetic diamond, HPHT treated synthetic diamond can be explicitly identified by the observation of unique spectroscopic features.

It is possible to arrange the instrument such that the diamond Raman line and its magnitude are detected, and in this way photoluminescence features of interest may be normalised to make the technique more quantitative. The magnitude of the Raman line varies according to the size of the gemstone or the cut characteristics of the gemstone, and the luminescence features can be ratioed in accordance with the Raman magnitude to reduce the effect of the size or cut of the gemstone.

The instrument may be useful if there is only one laser and only one wavelength of irradiation. However, it is preferred to provide irradiation of two different wavelengths, and in order to do this, it is preferred to provide two lasers, and preferably two spectrometers. The spectrometers can cover two different but overlapping wavelength regions. In theory, it is possible to use non-coherent or broad-band radiation for irradiating the gemstone to produce the photoluminescence spectra, though highly monochromatic radiation is required to produce the Raman line referred to above.

The window can be formed by the end of the fibre optic cable or cables, which may be surrounded by a ferrule. The ferrule and the fibre should have a low thermal mass and to be able to withstand the thermal cycles. Normally, there would be only one window in the container, although in theory it would be possible to have more than one, one being coupled to the laser(s) and the other being coupled to the spectrometer(s). In practice, the window will normally be in the very bottom of the container as the diamond can be placed easily in position and can rest by gravity on the window. However in theory the window could be in the side of the container though it would be awkward and special holding means would be required.

The thermally-insulated container can have a depth of less than about 50 mm or about 30 mm and a plan-view area of less than about 5000 mm² or 4000 mm² or even less than about 400 mm². The power rating of the laser, or of the first or second laser, may be less than about 100 mW, say between about 10 and about 50 mW. One of the lasers can be a diode laser and extremely small, of a size less than about 10 x 10 mm. The other lasers can have diameters of less than 30 mm and lengths of less than 200 mm or even less than 75 mm. The spectrometer can have dimensions less than about 150 x 200 x 50 mm. The instrument can have a height of about 150 mm or less, say about 150 mm or about 100 mm, and an outside plan-view length of less than about 550 and an outside plan-view width of less than about 250 or about 200 mm.

### PREFERRED EMBODIMENTS

Preferred embodiments of the invention are now described by way of example, with reference to the accompanying drawings, in which:-
Figure 1 is a part vertical section through a first instrument for indicating whether a polished gemstone is an untreated, natural diamond, vertical along the line I-I in Figure 2;
Figure 2 is a plan view of the instrument of Figure 1, with part of the top cover and other parts not shown;
Figure 3 is a third-angle projection of the sample chamber of the first instrument;
Figure 4 is a third-angle projection showing the sample holder of the first instrument;
Figure 5 is a third-angle projection of the housing of the first instrument, seen from the rear;
Figure 6 is a third-angle projection of the first instrument in its housing, seen from the front;
Figure 7 is a schematic vertical section through a second instrument;
Figure 8 is a schematic plan view of the second instrument; and
Figure 9 is a schematic vertical section through a third instrument.

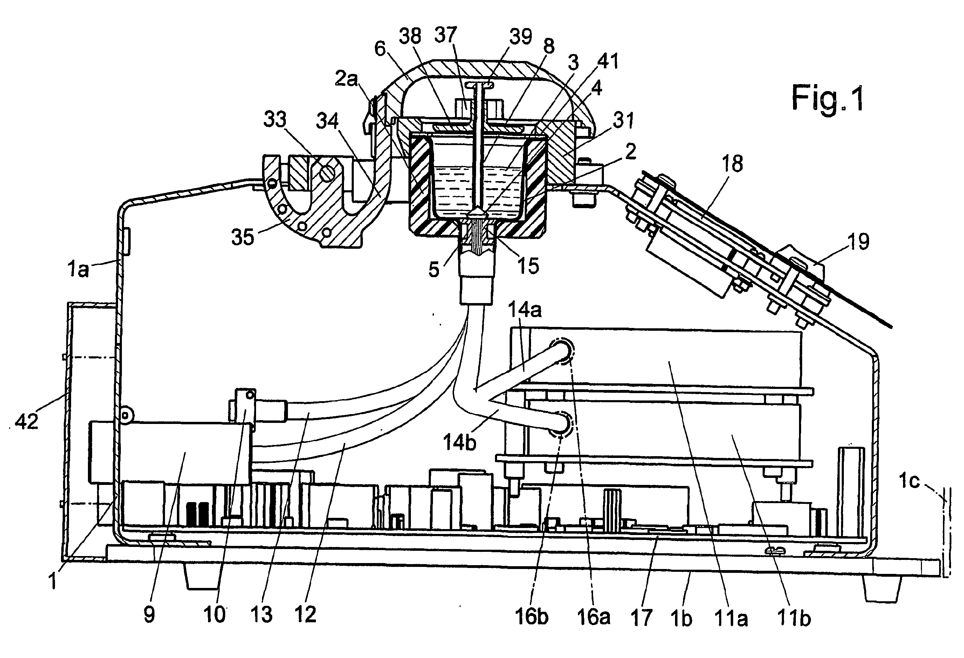

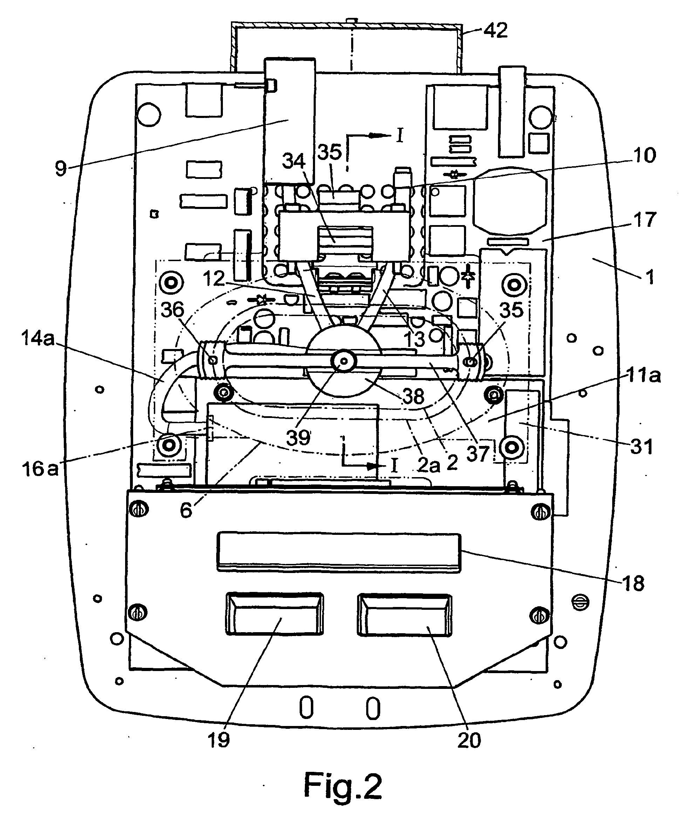

### The Instrument of Figures 1 to 6

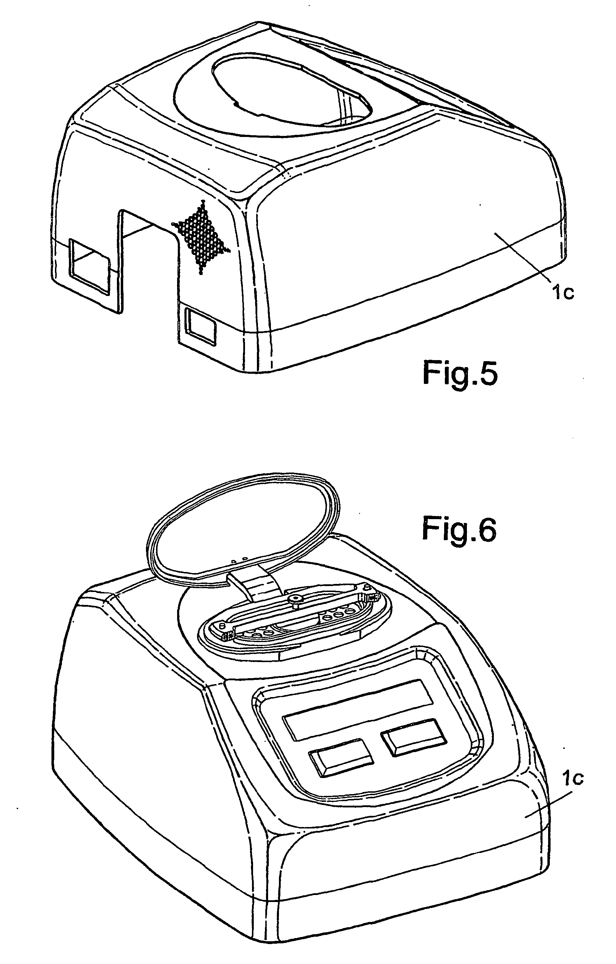

The instrument has a frame 1 which acts as a support structure to mount the other components in order to provide a self-contained, stand-alone instrument. The frame 1 is open at the sides, to provide access, and is covered by a removable plastics housing 1^{c} (see Figures 5 and 6) which encloses most of the components. The frame 1 comprises a cover 1^{a} and a base plate 1^{b} bolted to the cover 1^{a} and to which most of the components are bolted. A thermally-insulated cylindrical (elongate cross-section) thermoplastic thin-walled container or cryogen bath 2 is mounted in the top of the frame 1. The bath 2 is within a cylinder 2^{a} of expanded rigid foam such as polystyrene, acting as thermal insulation. The bath 2 is for receiving liquid nitrogen 3 and a polished gemstone 4 to be examined; the bath 2 has to be of a suitable size to receive the largest diamond expected and sufficient quantity of liquid nitrogen; it is of elongate shape in order to maximise its plan view area while keeping the front to back dimension of the instrument as small as possible. The bath 2 has a window 5 in its bottom, upon which a facet, preferably the table, of the gemstone 4 is to be placed. The bath 2 has an elliptical cover or sample chamber lid 6. There is a downwards projection or holder pin 8 for holding and centering the gemstone 4 against the window 5.

The pin 8 is a rigid tube of low thermal mass, having an inner diameter of typically 1 to 3 mm, and is made of a suitable engineering thermoplastic which resists the temperature of liquid nitrogen. The pin 8 is in the form of a sliding member with e.g. a friction fit or a simple sliding fit, to accommodate gemstones of different heights (table-to-culet point distances). The arrangement is such that the culet of the gemstone 4 can be pressed into the lower end of the pin 8, and either held in position by friction or by an adhesive material such as "Blu-Tac", prior to lowering the pin 8 into liquid nitrogen already in the bath 2 until the table of the gemstone 4 contacts the window 5.

The top part of the instrument, including the bath 2, cover 6 and projection 8, are described in more detail below.

The frame 1 contains a first, compact solid state (green) laser 9 as well as a second (red) laser 10. The frame 1 also contains two compact and sensitive CCD spectrometers 11^{a},11^{b}, sensitive in a suitable range or ranges. The lasers 9, 10 and the spectrometers 11^{a}, 11^{b} are bolted to the base plate 1^{b}. The lasers 9, 10 and the spectrometers 11^{a}, 11^{b} are coupled by individual fibre optic cables 12, 13, 14^{a}, 14^{b} or a single quadro-furcated fibre optic cable to the window 5. The window 5 is formed by the ends of the fibre optic cables 12, 13, 14^{a}, 14^{b}, or the end of the single cable, which terminate or terminates in the plane of the bottom of the bath 2. In this way, the lasers 9,10 are coupled to the window 5, for irradiating the gemstone 4 with radiation of two different wavelengths, and the spectrometers 11^{a}, 11^{b} are coupled to the window 5 for sensing photoluminescence spectra emitted by the gemstone 4 and giving corresponding spectral data signals at their outputs. The ends of the fibre optic cables 12, 13, 14^{a}, 14^{b} are surrounded by a very thin e.g. steel ferrule (not shown) retained in a spool-shaped retainer 15. An alternative is to have a smaller hole in the bottom of the bath 2 and omit the retainer 15. The retainer 15 and fibre optic cables 12, 13, 14^{a}, 14^{b} have a low thermal mass (i.e. in general are thin or of small diameter) and can withstand thermal shock. Preferably a single fibre forming each of the cables 13, 14^{a}, 14^{b} is surrounded at the window 5 by a bundle of fibres forming part of the excitation cable 12 from the laser 9. The fibres of the excitation cable 12, and optionally of all the cables 12, 13, 14^{a}, 14^{b}, are preferably all of about 250 micron or about 200 micron, or less, in diameter.

There are blocking filters shown schematically at 16^{a}, 16^{b} between the window 5 and the spectrometers 11^{a}, 11*^{b}*, for filtering out radiation at the wavelength of the irradiating radiation, e.g. blocking the wavelength of the laser 9, 10 in whose wavelength region the particular spectrometer 11^{a}, 11^{b} detects. There is a simple arrangement for switching between the two lasers 9,10. For safety, the excitation cable 12 has a mechanical shutter (not shown) in front of it, arranged such that the shutter is closed when the cover 6 is open. The laser 10 has an electronic safety device (not shown) actuated by a positive-break micro-switch associated with the cover 6, which de-energises the laser 10 when the cover 6 is open.

The output of the spectrometers 11^{a}, 11^{b} are connected to a processor in the form of an electronic control board on a printed circuit base 17 bolted to the base plate 1^{b}, for analysing the spectral data from the spectrometer and determining whether the gemstone 4 is an untreated natural diamond, etc. The processor is connected to a display 18 for displaying information indicating whether the gemstone 4 is an untreated natural diamond or an irradiated diamond or a synthetic diamond. The display 18 can give numerical or text results. Manual control members in the form of control buttons 19, 20 are indicated schematically.

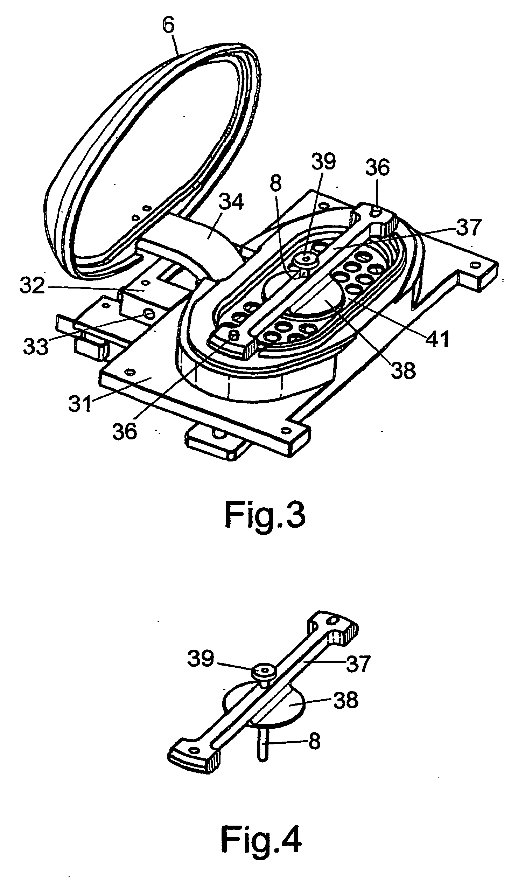

Figures 3 and 4 show details of parts immediately associated with the bath 2. There is a platform 31 which is fixed to the cover 1^{a} so that it fits over the top of the bath 2 and the insulation cylinder 2^{a}. The platform 31 carries a pivot block 32 mounting a pivot pin 33 on which is pivoted an arm 34 fixed to the sample chamber lid 6. The arm 34 has a tail 35 (see Figure 1) provided with a number of holes for connection to the mechanical shutter (not shown) in front of the laser 9 so that the laser 9 is occulted when the lid 6 is open.

The platform 31 has two upwardly-projecting pins 36, over which pass holes on the ends of a removable sample holder 37. The sample holder 37 has an integral sample holder cover or lid 38, through which the holder pin 8 passes as a simple sliding fit (though it could be a friction fit), the pin 8 having a collar 39 at its top end, for manipulation. The sample holder 37 has knurling on the sides of its ends, and can be simply manipulated by gripping the sides of the ends between the thumb and forefinger of each of the hands, to place the holder 37 over the pins 36.

As can be seen in Figures 1 and 3, there is an apertured plate 41 engaging the top edge of the bath 2, with a large central hole and other holes for the passage of the gasified cryogen. The plate 41 reduces the danger of the user putting a finger in the cryogen 3 in the bath 2. As can be seen in Figure 1, the sample holder lid 38 registers with the large central opening in the plate 41, but is just above it.

A rear cover 42 is shown for protecting the rear of the laser 9. The housing 1^{c} is held on the base plate 1^{b} by two screws (not shown), and has suitable openings for the lid 6, the display 18, the control buttons 19, 20 and the rear cover 42.

### EXAMPLE

One example of the instrument of Figures 1 to 6 had the following:
frame 1: Height about 111 mm, width and length 184 x 240 mm;
whole instrument: Height 150 mm, width and length 220 x 300 mm;
bath 2: 30 mm deep with the major and minor internal axes 100 mm and 40 mm, respectively, giving a plan view area of 3600 mm²;
projection 8: Acetal resin;
first laser 9: Wavelength 532 nm, frequency doubled Nd:YVO₄ GLM-110 Series laser supplied by Leadlight Technology (Taiwan), power 50 mW, diameter 20 mm, length 50 mm (as an alternative, a frequency-doubled Nd:YAG laser can be used, but the length is 140 mm);
second laser 10: 655 nm (settable between about 630 and about 700 nm) compact diode laser DL-5147-041 supplied by Sanyo, power 50 mW, diameter less than 10 mm, length less than 10 mm;
spectrometers 11^{a}, 11^{b}: Dual grating model SD2000, produced by Ocean Optics, distributed by World Precision Instruments, approximately 100 mm long, 140 mm wide and 40 mm high - a 100 micron slit can be placed in front of each spectrometer entrance slit, to improve spectral resolution; the spectrometers 11^{a}, 11^{b} sense luminescence features with zero-phonon lines between 550 and 1000 nm. The spectrometers 11^{a}, 11^{b} detect radiation excited by the laser 9 and excited by the laser 10, respectively;
excitation fibre optic cable 12: Bundle of 250 micron diameter fibres;
excitation fibre optic cable 13: Single 250 micron diameter fibre;
fibre optic cables 14^{a}, 14^{b}: Single 250 micron diameter fibres;
retainer 15: Acetal resin;
filters 16^{a}, 16^{b}: Long-wavelength-pass filters (e.g. Schott glass OG550 and RG 695), blocking the wavelength of the lasers 9, 10 respectively;
processor: Texas TMS320 F206 single chip integrated circuit 16 bit with 32 kwords of programmable memory and 9 kwords of storage memory, with other components on a printed circuit board 17 of roughly 235 x 160 mm size;
display 18: Liquid crystal device with 2 lines and 24 characters on each line, forming the front panel of the printed circuit board above, the display measuring approximately 105 x 30 mm;
weight: Less than 3 kg, i.e. a readily portable, self-contained, stand-alone instrument;
operation: The Fisher et al paper referred to above can be consulted for spectroscopic details relating to HPHT treatments. The instrument of the invention detects luminescence features with zero-phonon lines at 575 nm, 637 nm and 737 nm. These lines are typically characteristic of diamond grown by CVD methods. The instrument can also detect features characteristic of some synthetic diamond grown by HPHT syntheses. These features arise from atomic cobalt and nickel related impurities and have luminescence peaks at 580.4 nm, 720 nm, 753 nm and 793 nm. The instrument also detects a zero phonon line at 741 nm (the GR1 band) which is characteristic of diamond that has been subjected to irradiation treatment. HPHT treatment can be determined from the ratio of the intensities of the 575 nm and 637 nm features. The instrument can also be designed to detect a feature at 987 nm (the H2 band), whose presence determines that a type I diamond has undergone HPHT treatment in order to affect its colour. The instrument of the invention can furthermore detect the first-order Raman Stokes line arising from irradiation at a frequency of 532 nm or 655 nm, and use the height of the line to normalise the amplitude of the photoluminescence signals to give quantitative results for the photoluminescence spectra.

The instrument of Figures 1 to 6 is arranged to display one of three possible results, namely "pass", "refer" and "refer with a numerical result giving the intensity ratios of certain spectroscopic features", as described above.

Thus the instrument of Figures 1 to 6 indicates whether a polished gemstone is a natural diamond which has not been subjected to irradiation treatment and which has not been subjected to HPHT treatment. However, by selective detection of specific luminescence peaks, it is possible for the instrument to be arranged to indicate solely whether a polished gemstone is a natural diamond which has not been subjected to irradiation treatment or solely whether a polished gemstone is a natural diamond which has not been subjected to HPHT treatment.

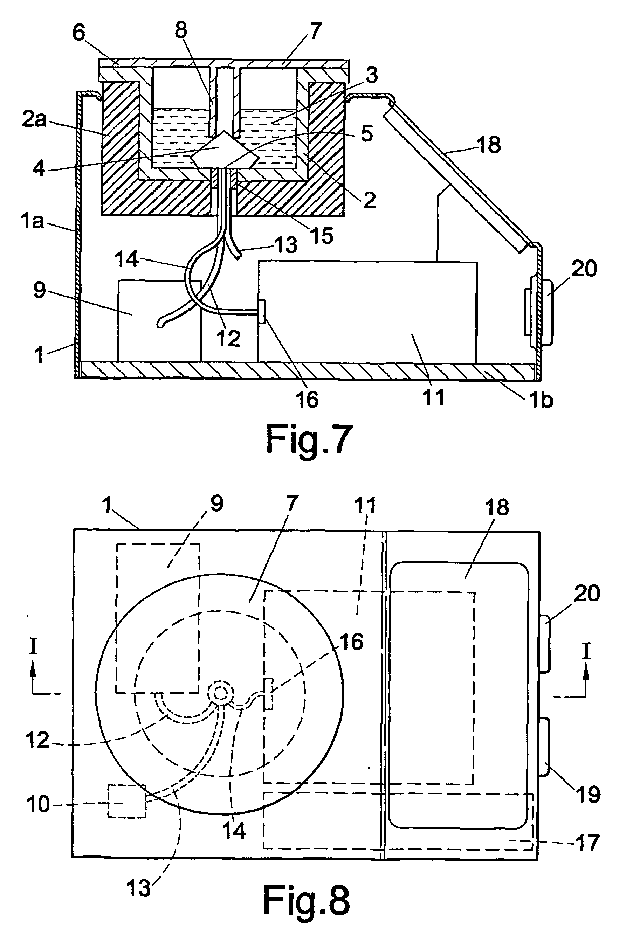

### The Instrument of Figures 7 and 8

The instrument of Figures 7 and 8 is fundamentally similar to that of Figures 1 to 6, and the same reference numerals are used for the same or like parts. There is a single spectrometer 11, with a single detection cable 14. There is a single filter 16. This demonstrates that if desired, one spectrometer can be removed from the arrangement of Figures 1 to 6, inserting a suitable filter in the single spectrometer, and removing the associated fibre optic cable or leg. The pin 8 is fixed to a flat cover 7 forming part of the cover arrangement, and the lay-out is much simpler than in the instrument of Figures 1 to 6. There is no indication of a mechanical shutter for the laser 9, but such can be provided so that when the lid 6 is open, the laser 9 is occulted.

In a different arrangement (not shown) of the instrument of Figures 7 and 8, a bi-furcated fibre optic is used. The light from one laser 9,10 falls directly onto a shutter in front of one leg of the fibre optic cable. Light from the second laser is deflected along the path of the first laser by a double-prism arrangement which is actuated by a mechanical solenoid.

The instrument of Figures 7 and 8 can be as in the Example set out above. The single filter 16 can be a combined long-wavelength-pass filter (e.g. a Schott Glass OG 550) to block light from the first laser 9, and a notch filter centred at the wavelength of the second laser 10 and blocking light over a wavelength range of 1 to 5 nm.

The container, which is of circular cross-section, can be 20 mm deep and of 20 mm internal diameter, giving a plan view cross-sectional area of about 315 mm².

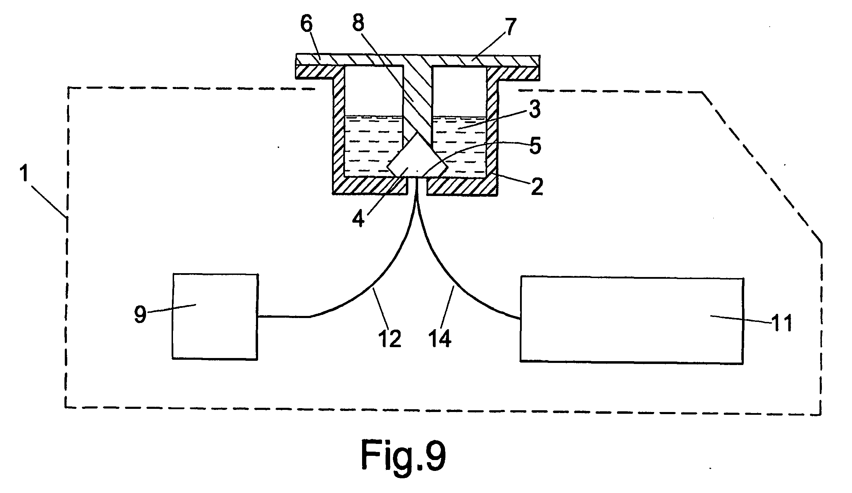

### The Instrument of Figure 9

The instrument of Figure 9 has different dimensions to the instrument of Figures 7 and 8, but is otherwise very similar except that the second laser 10 is omitted. Like references indicate like parts. The fibre optic cables 12, 14 are shown schematically.

The term "laser" is used herein to include any coherent radiation source. The term "spectrometer" is used herein to include any detector that can detect or sense the relevant photoluminescence wavelength, and in a simple version could be merely a narrow band pass filter and a photomultiplier tube.

Unless the context clearly requires otherwise, throughout the description and the claims, the words "comprise", "comprising", and the like, are to be construed in an inclusive as opposed to an exclusive or exhaustive sense; that is to say, in the sense of "including, but not limited to".

The present invention has been described above purely by way of example, and modifications can be made.

## Claims

1. Apparatus for examining a gemstone (4), comprising:
a thermally-insulated container (2) for containing the gemstone, and having a window (5);
means for cooling the container using a cryogen;
a cover (6 or 38) for the container;
a laser (9 or 10) for irradiating the gemstone through said window;
a spectrometer (11, 11a or 11b) for detecting through said window photoluminescence spectra emitted by the gemstone and giving corresponding spectral data signals at its output;
a blocking filter (16, 16a or 16b) between the window and the spectrometer, for filtering out radiation at the wavelength of the irradiating radiation;
a processor connected to the output of the spectrometer, for analysing the spectral data from the spectrometer;
a display (18) connected to the processor, for displaying information regarding the gemstone; and
a support structure (1);
**characterised in that** the apparatus is for indicating whether a polished gemstone (4) is a natural diamond which has not been subjected to irradiation treatment and has not been subjected to high-pressure high-temperature treatment, the processor and the display (18) being for indicating whether the gemstone is a natural diamond which has not been subjected to irradiation treatment and has not been subjected to high-pressure high-temperature treatment;
**in that** the container (2) is for receiving both the gemstone and the cryogen, whereby the gemstone will be directly immersed in the cryogen, and the window (5) is in the bottom of the container, whereby a facet of the gemstone will be placed adjacent the window; and
**in that** the support (1) structure mounts the foregoing components and provides a self-contained, stand-alone instrument, the laser (9 or 10) being coupled to said window and the spectrometer (11, 11a or 11b) being coupled to said window.

2. Apparatus for examining a gemstone (4), comprising:
a thermally-insulated container (2) for containing the gemstone, and having a window (5);
means for cooling the container using a cryogen;
a cover (6 or 38) for the container;
a laser (9 or 10) for irradiating the gemstone through said window;
a spectrometer (11, 11a or 11b) for detecting through said window photoluminescence spectra emitted by the gemstone and giving corresponding spectral data signals at its output;
a blocking filter (16, 16a or 16b) between the window and the spectrometer, for filtering out radiation at the wavelength of the irradiating radiation;
a processor connected to the output of the spectrometer, for analysing the spectral data from the spectrometer;
a display (18) connected to the processor, for displaying information regarding the gemstone; and
a support structure (1);
**characterised in that** the apparatus is for indicating whether a polished gemstone (4) is a natural diamond which has not been subjected to irradiation treatment, and the processor and display (18) are for indicating whether the gemstone is a natural diamond which has not been subjected to irradiation treatment;
**in that** the container (2) is for receiving both the gemstone and the cryogen, whereby the gemstone will be directly immersed in the cryogen, and the window (5) is in the bottom of the container, whereby a facet of the gemstone will be placed adjacent the window; and
**in that** the support structure mounts the foregoing components and provides a self-contained, stand-alone instrument, the laser (9 or 10) being coupled to said window and the spectrometer (11, 11a or 11b) being coupled to said window.

3. Apparatus for examining a gemstone (4), comprising:
a thermally-insulated container (2) for containing the gemstone, and having a window (5);
means for cooling the container using a cryogen;
a cover (6 or 38) for the container;
a laser (9 or 10) for irradiating the gemstone through said window;
a spectrometer (11, 11a or 11b) for detecting through said window photoluminescence spectra emitted by the gemstone and giving corresponding spectral data signals at its output;
a blocking filter (16, 16a or 16b) between the window and the spectrometer, for filtering out radiation at the wavelength of the irradiating radiation;
a processor connected to the output of the spectrometer, for analysing the spectral data from the spectrometer;
a display (18) connected to the processor, for displaying information regarding the gemstone; and
a support structure (1);
**characterised in that** the apparatus is for indicating whether a polished gemstone (4) is a natural diamond which has not been subjected to high-pressure high-temperature treatment, and the processor and display (18) are for indicating whether the gemstone is a natural diamond which has not been subjected to high-pressure high-temperature treatment;
**in that** the container (2) is for receiving both the gemstone and the cryogen, whereby the gemstone will be directly immersed in the cryogen, and the window (5) is in the bottom of the container, whereby a facet of the gemstone will be placed adjacent the window; and
**in that** the support structure (1) mounts the foregoing components and provides a self-contained, stand-alone instrument, the laser (9 or 10) being coupled to said window and the spectrometer (11, 11a or 11b) being coupled to said window.

4. The apparatus of any of the preceding Claims, wherein said laser (9) emits radiation at about 530 nm.

5. The apparatus of any of Claims 1 to 3, wherein said laser (10) emits radiation at between about 630 and about 700 nm.

6. The apparatus of Claim 5, wherein said laser (10) emits radiation at about 655 nm.

7. The apparatus of any of the preceding Claims, wherein said laser or lasers (9, 10) are for irradiating the gemstone (4) with radiations of at least two different wavelengths.

8. The apparatus of Claim 7, wherein the wavelengths are as in Claims 4 and 5 or Claims 4 and 6.

9. The apparatus of any of the preceding Claims, wherein there are at least two said lasers (9, 10), both coupled to said window (5), for irradiating the gemstone with respective radiations of different wavelengths.

10. The apparatus of any of the preceding Claims, wherein said laser or lasers (9, 10) are compact, solid state lasers.

11. The apparatus of any of the preceding Claims, wherein the spectrometer (11, 11a or 11b) detects the presence of at least one specific luminescence peak.

12. The apparatus of any of Claims 1 and 3 to 10, wherein the spectrometer (11, 11a or 11b) detects at least one luminescence peak to thereby indicate if the diamond (4) is a synthetic diamond grown by high-pressure high-temperature synthesis.

13. The apparatus of Claim 12, wherein the spectrometer (11, 11a or 11b) detects luminescence peaks at one or more of 580.4 nm, 720 nm, 753 nm and 793 nm, to thereby indicate if the diamond (4) is a synthetic diamond grown by high-pressure high-temperature synthesis.

14. The apparatus of any of Claims 1 and 3 to 13, wherein the spectrometer (11, 11a or 11b) detects the presence of at least two specific luminescence peaks and the processor ratios the peaks to determine if the diamond has been subjected to high-pressure high-temperature treatment.

15. The apparatus of Claim 14, wherein said at least two peaks are 575 nm and 637 nm.

16. The apparatus of any of Claims 11 to 15, wherein the spectrometer (11, 11 a or 11b) detects a luminescence peak at 737 nm to thereby determine if the diamond (4) is synthetic.

17. The apparatus of any of Claims 11 to 16, wherein the spectrometer (11, 11 a or 11 b) detects a luminescence peak at 741 nm to thereby determine if the diamond (4) has been subjected to irradiation treatment.

18. The apparatus of any of Claims 11 to 17, wherein the spectrometer (11, 11 a or 11b) detects a luminescence peak at 987 nm to thereby determine if the diamond (4) has been subjected to high-pressure high-temperature treatment.

19. The apparatus of any of the preceding Claims, wherein the spectrometer (11, 11a or 11b) gives a signal according to the amplitude of a diamond Raman peak in the photoluminescence spectra, and the output of the processor is normalised in accordance with the amplitude of the Raman peak.

20. The apparatus of any of the preceding Claims, wherein there are at least two said spectrometers (11, 11a or 11b), both coupled to a said window (5).

21. The apparatus of any of the preceding Claims, wherein the or each spectrometer (11, 11a or 11b) is sensitive in the range of about 550 to about 1000 nm.

22. The apparatus of any of the preceding Claims, wherein the or each spectrometer (11, 11a or 11b) is a compact CCD spectrometer.

23. The apparatus of any of the preceding Claims, wherein fibre optic cables (12,13, 14a, 14b) physically couple the laser(s) (9,10) and the spectrometer(s) (11, 11a or 11b) to said window (5).

24. The apparatus of Claim 23, wherein the ends of the fibre optic cables (12, 12, 14a, 14b) form said window (5).

25. The apparatus of Claim 23 or 24, wherein in the vicinity of said window (5), a first fibre optic cable (13, 14a, 14b) is surrounded by individual fibres of a further fibre optic cable (12) which is formed of a bundle of individual fibres.

26. The apparatus of Claim 23 or 24, wherein the spectrometer (11, 11a or 11b) is connected to said window (5) by a first fibre optic cable (14a or 14b) which in the vicinity of said window is surrounded by individual fibres of a further fibre optic cable (12) leading from a said laser (9 or 10), said further fibre optic cable being formed of a bundle of individual fibres.

27. The apparatus of Claim 25 or 26, wherein the cross-sectional area of said first fibre optic cable (13, 14a or 14b) is substantially less than that of said further fibre optic cable (12).

28. The apparatus of any of the preceding Claims, wherein said support structure (1) comprises a single housing enclosing all said components except the thermally-insulated container (4), the display (18) and at least one manual control member (19 or 20), the container (4) being received into the top of the housing.

29. The apparatus of any of the preceding Claims, and having a part (8) for holding the gemstone (4) against said window (5).

30. The apparatus of Claim 29, wherein the container cover (6 or 38) has a part (38) for covering the top of the container (2) and a downwards projection (8) with a recess in its lower end, for engaging the gemstone (4) and holding it against said window (5).

31. The apparatus of Claim 30, wherein the downwards projection (8) is a hollow tube.

32. The apparatus of any of the preceding Claims, and having a height of less than about 150 mm.

33. The apparatus of Claim 32, and having a height of about 100 mm.

34. The apparatus of any of the preceding Claims, and having a plan view length of less than about 550 mm.

35. The apparatus of Claim 34, and having a height of about 150 mm or less.

36. The apparatus of any of the preceding Claims, and having a container depth of less than about 50 mm.

37. The apparatus of Claim 36, and having a container depth of less than about 30 mm.

38. The apparatus of any of the preceding Claims, and having a container plan view area of less than about 5000 mm².

39. The apparatus of Claim 38, and having a container plan view area of less than about 400 mm².

40. The apparatus of any of the preceding Claims, wherein the size of the window (5) is much less than the size of the bottom of the thermally-insulated container (2).

41. The apparatus of any of the preceding Claims, wherein the container (2) is arranged for receiving liquid nitrogen as the cryogen.

42. A method of examining a gemstone (4), comprising irradiating the gemstone with a laser (9 or 10) and detecting photoluminescence spectra emitted by the gemstone and displaying on a display (18) information regarding the gemstone, using an apparatus which comprises a support structure (1) carrying at least the following components: a thermally-insulated container (2) for containing the gemstone, and having at least one window (5), means for cooling the container using a cryogen, a cover (6 or 38) for the container, a laser (9 or 10) for irradiating the gemstone through said window, a spectrometer (11, 11a or 11b) for detecting through said window photoluminescence spectra emitted by the gemstone and giving corresponding spectral data signals at its output, a blocking filter (16, 16a or 16b) between the window and the spectrometer, for filtering out radiation at the wavelength of the irradiating radiation, a processor connected to the output of the spectrometer, for analysing the spectral data from the spectrometer, and a display (18) connected to the processor, for displaying information regarding the gemstone;
**characterised in that** the method is used to indicate whether a polished gemstone (4) is a natural diamond which has not been subjected to irradiation treatment and has not been subjected to high-pressure high-temperature treatment, and the processor is for indicating whether the gemstone is a natural diamond which has not been subjected to irradiation treatment and has not been subjected to high-pressure high-temperature treatment and the display is for displaying information indicating whether the gemstone is a natural diamond which has not been subjected to irradiation treatment and has not been subjected to high-pressure high-temperature treatment;
**in that** the gemstone and the cryogen are placed in the container (2) so that the gemstone is directly immersed in the cryogen, and a facet of the gemstone is positioned adjacent the window (5); and
**in that** the support structure (1) mounts the foregoing components and the apparatus is a self-contained, stand-alone instrument, the laser (9, 10) being coupled to said window and the spectrometer (11, 11a or 11b) being coupled to said window.

43. A method of examining a gemstone (4), comprising irradiating the gemstone with a laser (9 or 10) and detecting photoluminescence spectra emitted by the gemstone and displaying on a display (18) information regarding the gemstone, using an apparatus which comprises a support structure (1) carrying at least the following components: a thermally-insulated container (2) for containing the gemstone, and having a window (5), means for cooling the container using a cryogen, a cover (6 or 38) for the container, a laser (9 or 10) for irradiating the gemstone through said window, a spectrometer (11, 11a or 11b) for detecting through said window photoluminescence spectra emitted by the gemstone and giving corresponding spectral data signals at its output, a blocking filter (16,16a or 16b) between the window and the spectrometer, for filtering out radiation at the wavelength of the irradiating radiation, a processor connected to the output of the spectrometer, for analysing the spectral data from the spectrometer, and a display (18) connected to the processor, for displaying information regarding the gemstone;
**characterised in that** the method is used to indicate whether a polished gemstone (4) is a natural diamond which has not been subjected to irradiation treatment, and the processor is for indicating whether the gemstone is a natural diamond which has not been subjected to irradiation treatment and the display is for displaying information indicating whether the gemstone is a natural diamond which has not been subjected to irradiation treatment;
**in that** the gemstone and the cryogen are placed in the container (2) so that the gemstone is directly immersed in the cryogen, and a facet of the gemstone is positioned adjacent the window; and
**in that** the support structure (1) mounts the foregoing components and the apparatus is a self-contained, stand-alone instrument, the laser (9,10) being coupled to said window and the spectrometer (11, 11a or 11b) being coupled to said window.

44. A method of examining a gemstone (4), comprising irradiating the gemstone with a laser (9 or 10) and detecting photoluminescence spectra emitted by the gemstone and displaying on a display (18) information regarding the gemstone, using an apparatus which comprises a support structure (1) carrying at least the following components: a thermally-insulated container (2) for containing the gemstone, and having a window (5), means for cooling the container using a cryogen, a cover (6 or 38) for the container, a laser (9 or 10) for irradiating the gemstone through said window, a spectrometer (11, 11a or 11b) for detecting through said window photoluminescence spectra emitted by the gemstone and giving corresponding spectral data signals at its output, a blocking filter (16, 16a or 16b) between the window and the spectrometer, for filtering out radiation at the wavelength of the irradiating radiation, a processor connected to the output of the spectrometer, for analysing the spectral data from the spectrometer, and a display (18) connected to the processor, for displaying information regarding the gemstone;
**characterised in that** the method is used to indicate whether a polished gemstone (4) is a natural diamond and has not been subjected to high-pressure high-temperature treatment, and the processor is for indicating whether the gemstone is a natural diamond which has not been subjected to high-pressure high-temperature treatment and the display is for displaying information indicating whether the gemstone is a natural diamond which has not been subjected to high-pressure high-temperature treatment;
**in that** the gemstone and the cryogen are placed in the container (2) so that the gemstone is directly immersed in the cryogen, and a facet of the gemstone is positioned adjacent the window; and
**in that** the support structure (1) mounts the foregoing components and the apparatus is a self-contained, stand-alone instrument, the laser (9,10) being coupled to said window and the spectrometer (11, 11 a or 11b) being coupled to said window.

45. The method of any of Claims 42 to 44, wherein polished gemstones are screened to reject all that are synthetic or are not type II natural diamonds, and those that are not rejected are tested using said apparatus

46. The method of any of Claims 42 to 45, wherein the cryogen is liquid nitrogen.

47. The method of any of Claims 42 to 46, wherein the apparatus is as claimed in any of Claims 4 to 40.

## Patentansprüche

1. Vorrichtung zum Untersuchen eines Edelsteins (4), die Folgendes umfasst:
einen thermisch isolierten Behälter (2) zum Aufnehmen des Edelsteins und mit einem Fenster (5);
Mittel zum Kühlen des Behälters unter Verwendung eines Kältemittels;
einen Deckel (6 oder 38) für den Behälter;
einen Laser (9 oder 10) zum Bestrahlen des Edelsteins durch das Fenster;
ein Spektrometer (11, 11 a oder 11b) zum Erkennen von von dem Edelstein emittierten Photolumineszenzspektren durch das Fenster und das an seinem Ausgang entsprechende Spektraldatensignale liefert;
ein Sperrfilter (16, 16a oder 16b) zwischen dem Fenster und dem Spektrometer zum Herausfiltern von Strahlen mit der Wellenlänge der Bestrahlungsstrahlen;
einen mit dem Ausgang des Spektrometers verbundenen Prozessor zum Analysieren der Spektraldaten vom Spektrometer;
eine mit dem Prozessor verbundene Anzeige (18) zum Anzeigen von Informationen in Bezug auf den Edelstein; und
eine Trägerkonstruktion (1);
**dadurch gekennzeichnet, dass** die Vorrichtung die Aufgabe hat, anzuzeigen, ob ein geschliffener Edelstein (4) ein Naturdiamant ist, der keiner Bestrahlungsbehandlung unterzogen wurde und keiner Hochdruck-Hochtemperaturbehandlung unterzogen wurde, der Prozessor und die Anzeige (18) die Aufgabe haben, anzuzeigen, ob der Edelstein ein Naturdiamant ist, der keiner Bestrahlungsbehandlung unterzogen wurde und keiner Hochdruck-Hochtemperaturbehandlung unterzogen wurde;
dass der Behälter (2) zum Aufnehmen des Edelsteins und des Kältemittels ist, wodurch der Edelstein direkt in dem Kältemittel untergetaucht wird, und das Fenster (5) im Boden des Behälters ist, wodurch eine Facette des Edelsteins an das Fenster angrenzend platziert wird; und
dass die Trägerkonstruktion (1) die vorangehenden Komponenten haltert und ein in sich abgeschlossenes unabhängiges Instrument bereitstellt, wobei der Laser (9 oder 10) mit dem Fenster gekoppelt ist und das Spektrometer (11, 11a oder 11b) mit dem Fenster gekoppelt ist.

2. Vorrichtung zum Untersuchen eines Edelsteins (4), die Folgendes umfasst:
einen thermisch isolierten Behälter (2) zum Aufnehmen des Edelsteins und mit einem Fenster (5);
Mittel zum Kühlen des Behälters unter Verwendung eines Kältemittels;
einen Deckel (6 oder 38) für den Behälter;
einen Laser (9 oder 10) zum Bestrahlen des Edelsteins durch das Fenster;
ein Spektrometer (11, 11a oder 11b) zum Erkennen von von dem Edelstein emittierten Photolumineszenzspektren durch das Fenster und das an seinem Ausgang entsprechende Spektraldatensignale liefert;
ein Sperrfilter (16, 16a oder 16b) zwischen dem Fenster und dem Spektrometer zum Herausfiltern von Strahlen mit der Wellenlänge der Bestrahlungsstrahlen;
einen mit dem Ausgang des Spektrometers verbundenen Prozessor zum Analysieren der Spektraldaten vom Spektrometer;
eine mit dem Prozessor verbundene Anzeige (18) zum Anzeigen von Informationen in Bezug auf den Edelstein; und
eine Trägerkonstruktion (1);
**dadurch gekennzeichnet, dass** die Vorrichtung die Aufgabe hat, anzuzeigen, ob ein geschliffener Edelstein (4) ein Naturdiamant ist, der keiner Bestrahlungsbehandlung unterzogen wurde, und der Prozessor und die Anzeige (18) die Aufgabe haben, anzuzeigen, ob der Edelstein ein Naturdiamant ist, der keiner Bestrahlungsbehandlung unterzogen wurde;
dass der Behälter (2) zum Aufnehmen des Edelsteins und des Kältemittels ist, wodurch der Edelstein direkt in dem Kältemittel untergetaucht wird, und das Fenster (5) im Boden des Behälters ist, wodurch eine Facette des Edelsteins an das Fenster angrenzend platziert wird; und
dass die Trägerkonstruktion die vorangehenden Komponenten haltert und ein in sich abgeschlossenes unabhängiges Instrument bereitstellt, wobei der Laser (9 oder 10) mit dem Fenster gekoppelt ist und das Spektrometer (11, 11a oder 11b) mit dem Fenster gekoppelt ist.

3. Vorrichtung zum Untersuchen eines Edelsteins (4), die Folgendes umfasst:
einen thermisch isolierten Behälter (2) zum Aufnehmen des Edelsteins und mit einem Fenster (5);
Mittel zum Kühlen des Behälters unter Verwendung eines Kältemittels;
einen Deckel (6 oder 38) für den Behälter;
einen Laser (9 oder 10) zum Bestrahlen des Edelsteins durch das Fenster;
ein Spektrometer (11, 11a oder 11b) zum Erkennen von von dem Edelstein emittierten Photolumineszenzspektren durch das Fenster und das an seinem Ausgang entsprechende Spektraldatensignale liefert;
ein Sperrfilter (16, 16a oder 16b) zwischen dem Fenster und dem Spektrometer zum Herausfiltern von Strahlen mit der Wellenlänge der Bestrahlungsstrahlen;
einen mit dem Ausgang des Spektrometers verbundenen Prozessor zum Analysieren der Spektraldaten vom Spektrometer;
eine mit dem Prozessor verbundene Anzeige (18) zum Anzeigen von Informationen in Bezug auf den Edelstein; und
eine Trägerkonstruktion (1);
**dadurch gekennzeichnet, dass** die Vorrichtung die Aufgabe hat, anzuzeigen, ob ein geschliffener Edelstein (4) ein Naturdiamant ist, der keiner Hochdruck-Hochtemperaturbehandlung unterzogen wurde, und der Prozessor und die Anzeige (18) die Aufgabe haben, anzuzeigen, ob der Edelstein ein Naturdiamant ist, der keiner Hochdruck-Hochtemperaturbehandlung unterzogen wurde;
dass der Behälter (2) zum Aufnehmen des Edelsteins und des Kältemittels ist, wodurch der Edelstein direkt in dem Kältemittel untergetaucht wird, und das Fenster (5) im Boden des Behälters ist, wodurch eine Facette des Edelsteins an das Fenster angrenzend platziert wird; und
dass die Trägerkonstruktion (1) die vorangehenden Komponenten haltert und ein in sich abgeschlossenes unabhängiges Instrument bereitstellt, wobei der Laser (9 oder 10) mit dem Fenster gekoppelt ist und das Spektrometer (11, 11a oder 11b) mit dem Fenster gekoppelt ist.

4. Vorrichtung nach einem der vorhergehenden Ansprüche, bei der der Laser (9) Strahlen mit etwa 530 nm emittiert.

5. Vorrichtung nach einem der Ansprüche 1 bis 3, bei der der Laser (10) Strahlen zwischen etwa 630 und etwa 700 nm emittiert.

6. Vorrichtung nach Anspruch 5, bei der der Laser (10) Strahlen mit etwa 655 nm emittiert.

7. Vorrichtung nach einem der vorhergehenden Ansprüche, bei der der oder die Laser (9, 10) die Aufgabe haben, den Edelstein (4) mit Strahlen mit wenigstens zwei verschiedenen Wellenlängen zu bestrahlen.

8. Vorrichtung nach Anspruch 7, bei der die Wellenlängen wie in Anspruch 4 und 5 oder wie in Anspruch 4 und 6 sind.

9. Vorrichtung nach einem der vorhergehenden Ansprüche, die wenigstens zwei Laser (9, 10) aufweist, die beide mit dem Fenster (5) gekoppelt sind zum Bestrahlen des Edelsteins mit jeweiligen Strahlen mit verschiedenen Wellenlängen.

10. Vorrichtung nach einem der vorhergehenden Ansprüche, bei der der oder die Laser (9, 10) kompakte Festkörperlaser sind.

11. Vorrichtung nach einem der vorhergehenden Ansprüche, bei der das Spektrometer (11, 11a oder 11b) das Vorhandensein von wenigstens einer spezifischen Lumineszenzspitze erkennt.

12. Vorrichtung nach einem der Ansprüche 1 und 3 bis 10, bei der das Spektrometer (11, 11a oder 11b) wenigstens eine Lumineszenzspitze erkennt, um **dadurch** anzuzeigen, ob der Diamant (4) ein synthetischer Diamant ist, der mittels Hochdruck-Hochtemperatursynthese hergestellt wurde.

13. Vorrichtung nach Anspruch 12, bei der das Spektrometer (11, 11a oder 11b) Lumineszenzspitzen mit wenigstens einem der Werte 580,4 nm, 720 nm, 753 nm und 793 nm erkennt, um **dadurch** anzuzeigen, ob der Diamant (4) ein synthetischer Diamant ist, der mittels Hochdruck-Hochtemperatursynthese hergestellt wurde.

14. Vorrichtung nach einem der Ansprüche 1 und 3 bis 13, bei der das Spektrometer (11, 11a oder 11b) das Vorhandensein von wenigstens zwei spezifischen Lumineszenzspitzen erkennt und der Prozessor das Verhältnis der Spitzen ermittelt, um zu bestimmen, ob der Diamant einer Hochdruck-Hochtemperaturbehandlung unterzogen wurde.

15. Vorrichtung nach Anspruch 14, bei der die wenigstens zwei Spitzen 575 nm und 637 nm sind.

16. Vorrichtung nach einem der Ansprüche 11 bis 15, bei der das Spektrometer (11, 11 a oder 11b) eine Lumineszenzspitze mit 737 nm erkennt, um **dadurch** zu bestimmen, ob der Diamant (4) synthetisch ist.

17. Vorrichtung nach einem der Ansprüche 11 bis 16, bei der das Spektrometer (11, 11a oder 11b) eine Lumineszenzspitze mit 741 nm erkennt, um **dadurch** zu bestimmen, ob der Diamant (4) einer Strahlungsbehandlung unterzogen wurde.

18. Vorrichtung nach einem der Ansprüche 11 bis 17, bei der das Spektrometer (11, 11a oder 11b) eine Lumineszenzspitze mit 987 nm erkennt, um **dadurch** zu bestimmen, ob der Diamant (4) einer Hochdruck-Hochtemperaturbehandlung unterzogen wurde.

19. Vorrichtung nach einem der vorhergehenden Ansprüche, bei der das Spektrometer (11, 11a oder 11b) ein Signal gemäß der Amplitude einer Diamanten-Raman-Spitze in den Photolumineszenzspektren liefert und der Ausgang des Prozessors gemäß der Amplitude der Raman-Spitze normalisiert wird.

20. Vorrichtung nach einem der vorhergehenden Ansprüche, die wenigstens zwei Spektrometer (11, 11a oder 11b) aufweist, die beide mit einem Fenster (5) gekoppelt sind.

21. Vorrichtung nach einem der vorhergehenden Ansprüche, bei der das oder jedes Spektrometer (11, 11a oder 11b) im Bereich von etwa 550 bis etwa 1000 nm empfindlich ist.

22. Vorrichtung nach einem der vorhergehenden Ansprüche, bei der das oder jedes Spektrometer (11, 11 a oder 11 b) ein kompaktes CCD-Spektrometer ist.

23. Vorrichtung nach einem der vorhergehenden Ansprüche, bei der Lichtwellenleiter (12, 13, 14a, 14b) den/die Laser (9, 10) und das/die Spektrometer (11, 11a oder 11b) physikalisch mit dem Fenster (5) koppeln.

24. Vorrichtung nach Anspruch 23, bei der die Enden der Lichtwellenleiter (12, 13, 14a, 14b) das Fenster (5) bilden.

25. Vorrichtung nach Anspruch 23 oder 24, bei der in der Nähe des Fensters (5) ein erster Lichtwellenleiter (13, 14a, 14b) von einzelnen Fasern eines weiteren Lichtwellenleiters (12) umgeben ist, der aus einem Bündel einzelner Fasern gebildet ist.

26. Vorrichtung nach Anspruch 23 oder 24, bei der das Spektrometer (11, 11a oder 11b) durch einen ersten Lichtwellenleiter (14a oder 14b) mit dem Fenster (5) verbunden ist, der in der Nähe des Fensters von einzelnen Fasern eines weiteren Lichtwellenleiters (12) umgeben ist, der von einem genannten Laser (9 oder 10) wegführt, wobei der weitere Lichtwellenleiter aus einem Bündel einzelner Fasern gebildet ist.

27. Vorrichtung nach Anspruch 25 oder 26, bei der die Querschnittsfläche des ersten Lichtwellenleiters (13, 14a oder 14b) beträchtlich kleiner als die des weiteren Lichtwellenleiters (12) ist.

28. Vorrichtung nach einem der vorhergehenden Ansprüche, bei der die Trägerkonstruktion (1) ein einzelnes Gehäuse umfasst, das alle genannten Komponenten außer dem thermisch isolierten Behälter (4), der Anzeige (18) und wenigstens einem manuellen Bedienelement (19 oder 20) einschließt, wobei der Behälter (4) in die Oberseite des Gehäuse aufgenommen ist.

29. Vorrichtung nach einem der vorhergehenden Ansprüche und mit einem Teil (8) zum Festhalten des Edelsteins (4) am Fenster (5).

30. Vorrichtung nach Anspruch 29, bei der der Behälterdeckel (6 oder 38) einen Teil (38) zum Abdecken der Oberseite des Behälters (2) und einen Abwärtsvorsprung (8) mit einer Aussparung in seinem unteren Ende hat, um den Edelstein (4) in Eingriff zu nehmen und ihn am Fenster (5) festzuhalten.

31. Vorrichtung nach Anspruch 30, bei der der Abwärtsvorsprung (8) eine hohle Röhre ist.

32. Vorrichtung nach einem der vorhergehenden Ansprüche und mit einer Höhe von weniger als etwa 150 mm.

33. Vorrichtung nach Anspruch 32 und mit einer Höhe von etwa 100 mm.

34. Vorrichtung nach einem der vorhergehenden Ansprüche und mit einer Draufsichtlänge von weniger als etwa 550 mm.

35. Vorrichtung nach Anspruch 34 und mit einer Höhe von etwa 150 mm oder weniger.

36. Vorrichtung nach einem der vorhergehenden Ansprüche und mit einer Behältertiefe von weniger als etwa 50 mm.

37. Vorrichtung nach Anspruch 36 und mit einer Behältertiefe von weniger als etwa 30 mm.

38. Vorrichtung nach einem der vorhergehenden Ansprüche und mit einer Behälter-Draufsichtfläche von weniger als 5000 mm².

39. Vorrichtung nach Anspruch 38 und mit einer Behälter-Draufsichtfläche von weniger als 400 mm².

40. Vorrichtung nach einem der vorhergehenden Ansprüche, bei der die Größe des Fensters (5) viel kleiner als die Größe des Bodens des thermisch isolierten Behälters (2) ist.

41. Vorrichtung nach einem der vorhergehenden Ansprüche, bei der der Behälter (2) für das Aufnehmen von flüssigem Stickstoff als dem Kältemittel ausgelegt ist.

42. Verfahren zum Untersuchen eines Edelsteins (4), umfassend Bestrahlen des Edelsteins mit einem Laser (9 oder 10) und Erkennen von von dem Edelstein emittierten Lumineszenzspektren und Anzeigen von Informationen in Bezug auf den Edelstein auf einer Anzeige (18), Benutzen einer Vorrichtung, die eine Trägerkonstruktion (1) umfasst, die wenigstens die folgenden Komponenten trägt: einen thermisch isolierten Behälter (2) zum Aufnehmen des Edelsteins und mit wenigstens einem Fenster (5), Mittel zum Kühlen des Behälters unter Verwendung eines Kältemittels, einen Deckel (6 oder 38) für den Behälter, einen Laser (9 oder 10) zum Bestrahlen des Edelsteins durch das Fenster, ein Spektrometer (11, 11 a oder 11b) zum Erkennen von von dem Edelstein emittierten Photolumineszenzspektren durch das Fenster und das an seinem Ausgang entsprechende Spektraldatensignale liefert, ein Sperrfilter (16, 16a oder 16b) zwischen dem Fenster und dem Spektrometer zum Herausfiltern von Strahlen mit der Wellenlänge der Bestrahlungsstrahlen, einen mit dem Ausgang des Spektrometers verbundenen Prozessor zum Analysieren der Spektraldaten vom Spektrometer und eine mit dem Prozessor verbundene Anzeige (18) zum Anzeigen von Informationen in Bezug auf den Edelstein,
**dadurch gekennzeichnet, dass** das Verfahren dazu verwendet wird, um anzuzeigen, ob ein geschliffener Edelstein (4) ein Naturdiamant ist, der keiner Bestrahlungsbehandlung unterzogen wurde und keiner Hochdruck-Hochtemperaturbehandlung unterzogen wurde, und der Prozessor die Aufgabe hat, anzuzeigen, ob der Edelstein ein Naturdiamant ist, der keiner Bestrahlungsbehandlung unterzogen wurde und keiner Hochdruck-Hochtemperaturbehandlung unterzogen wurde, und die Anzeige die Aufgabe hat, Informationen anzuzeigen, die angeben, ob der Edelstein ein Naturdiamant ist, der keiner Bestrahlungsbehandlung unterzogen wurde und keiner Hochdruck-Hochtemperaturbehandlung unterzogen wurde;
dass der Edelstein und das Kältemittel in den Behälter (2) gegeben werden, so dass der Edelstein direkt in dem Kältemittel untergetaucht wird und eine Facette des Edelsteins an das Fenster (5) angrenzend platziert wird; und
dass die Trägerkonstruktion (1) die vorangehenden Komponenten haltert und die Vorrichtung ein in sich abgeschlossenes unabhängiges Instrument ist, wobei der Laser (9 oder 10) mit dem Fenster gekoppelt ist und das Spektrometer (11, 11a oder 11b) mit dem Fenster gekoppelt ist.

43. Verfahren zum Untersuchen eines Edelsteins (4), umfassend Bestrahlen des Edelsteins mit einem Laser (9 oder 10) und Erkennen von von dem Edelstein emittierten Lumineszenzspektren und Anzeigen von Informationen in Bezug auf den Edelstein auf einer Anzeige (18) unter Verwendung einer Vorrichtung, die eine Trägerkonstruktion (1) umfasst, die wenigstens die folgenden Komponenten trägt: einen thermisch isolierten Behälter (2) zum Aufnehmen des Edelsteins und mit einem Fenster (5), Mittel zum Kühlen des Behälters unter Verwendung eines Kältemittels, einen Deckel (6 oder 38) für den Behälter, einen Laser (9 oder 10) zum Bestrahlen des Edelsteins durch das Fenster, ein Spektrometer (11, 11 a oder 11b) zum Erkennen von von dem Edelstein emittierten Photolumineszenzspektren durch das Fenster und das an seinem Ausgang entsprechende Spektraldatensignale liefert, ein Sperrfilter (16, 16a oder 16b) zwischen dem Fenster und dem Spektrometer zum Herausfiltern von Strahlen mit der Wellenlänge der Bestrahlungsstrahlen, einen mit dem Ausgang des Spektrometers verbundenen Prozessor zum Analysieren der Spektraldaten vom Spektrometer und eine mit dem Prozessor verbundene Anzeige (18) zum Anzeigen von Informationen in Bezug auf den Edelstein;
**dadurch gekennzeichnet, dass** das Verfahren dazu verwendet wird, um anzuzeigen, ob ein geschliffener Edelstein (4) ein Naturdiamant ist, der keiner Bestrahlungsbehandlung unterzogen wurde, und der Prozessor die Aufgabe hat, anzuzeigen, ob der Edelstein ein Naturdiamant ist, der keiner Bestrahlungsbehandlung unterzogen wurde, und die Anzeige die Aufgabe hat, Informationen anzuzeigen, die angeben, ob der Edelstein ein Naturdiamant ist, der keiner Bestrahlungsbehandlung unterzogen wurde;
dass der Edelstein und das Kältemittel in den Behälter (2) gegeben werden, so dass der Edelstein direkt in dem Kältemittel untergetaucht wird und eine Facette des Edelsteins an das Fenster angrenzend platziert wird; und
dass die Trägerkonstruktion (1) die vorangehenden Komponenten haltert und die Vorrichtung ein in sich abgeschlossenes unabhängiges Instrument ist, wobei der Laser (9 oder 10) mit dem Fenster gekoppelt ist und das Spektrometer (11, 11a oder 11b) mit dem Fenster gekoppelt ist.

44. Verfahren zum Untersuchen eines Edelsteins (4), umfassend Bestrahlen des Edelsteins mit einem Laser (9 oder 10) und Erkennen von von dem Edelstein emittierten Lumineszenzspektren und Anzeigen von Informationen in Bezug auf den Edelstein auf einer Anzeige (18) unter Verwendung einer Vorrichtung, die eine Trägerkonstruktion (1) umfasst, die wenigstens die folgenden Komponenten trägt: einen thermisch isolierten Behälter (2) zum Aufnehmen des Edelsteins und mit einem Fenster (5), Mittel zum Kühlen des Behälters unter Verwendung eines Kältemittels, einen Deckel (6 oder 38) für den Behälter, einen Laser (9 oder 10) zum Bestrahlen des Edelsteins durch das Fenster, ein Spektrometer (11, 11 a oder 11b) zum Erkennen von von dem Edelstein emittierten Photolumineszenzspektren durch das Fenster und das an seinem Ausgang entsprechende Spektraldatensignale liefert, ein Sperrfilter (16, 16a oder 16b) zwischen dem Fenster und dem Spektrometer zum Herausfiltern von Strahlen mit der Wellenlänge der Bestrahlungsstrahlen, einen mit dem Ausgang des Spektrometers verbundenen Prozessor zum Analysieren der Spektraldaten vom Spektrometer und eine mit dem Prozessor verbundene Anzeige (18) zum Anzeigen von Informationen in Bezug auf den Edelstein;
**dadurch gekennzeichnet, dass** das Verfahren dazu verwendet wird, um anzuzeigen, ob ein geschliffener Edelstein (4) ein Naturdiamant ist und keiner Hochdruck-Hochtemperaturbehandlung unterzogen wurde, und der Prozessor die Aufgabe hat, anzuzeigen, ob der Edelstein ein Naturdiamant ist, der keiner Hochdruck-Hochtemperaturbehandlung unterzogen wurde, und die Anzeige die Aufgabe hat, Informationen anzuzeigen, die angeben, ob der Edelstein ein Naturdiamant ist, der keiner Hochdruck-Hochtemperaturbehandlung unterzogen wurde;
dass der Edelstein und das Kältemittel in den Behälter (2) gegeben werden, so dass der Edelstein direkt in dem Kältemittel untergetaucht wird und eine Facette des Edelsteins an das Fenster angrenzend platziert wird; und
dass die Trägerkonstruktion (1) die vorangehenden Komponenten haltert und die Vorrichtung ein in sich abgeschlossenes unabhängiges Instrument ist, wobei der Laser (9 oder 10) mit dem Fenster gekoppelt ist und das Spektrometer (11, 11a oder 11b) mit dem Fenster gekoppelt ist.

45. Verfahren nach einem der Ansprüche 42 bis 44, bei dem die geschliffenen Edelsteine untersucht werden, um alle auszusortieren, die synthetisch sind oder keine Naturdiamanten vom Typ II sind, und jene, die nicht aussortiert werden, mit der genannten Vorrichtung geprüft werden.

46. Verfahren nach einem der Ansprüche 42 bis 45, bei dem das Kältemittel flüssiger Stickstoff ist.

47. Verfahren nach einem der Ansprüche 42 bis 46, bei dem die Vorrichtung einem der Ansprüche 4 bis 40 gemäß ist.

## Revendications

1. Dispositif d'examen d'une pierre précieuse (4), comprenant:
un récipient à isolation thermique (2) pour contenir la pierre précieuse, et comportant une fenêtre (5);
un moyen pour refroidir le récipient par l'intermédiaire d'un fluide cryogénique;
un couvercle (6 ou 38) pour le récipient;
un laser (9 ou 10) pour irradier la pierre précieuse à travers ladite fenêtre;
un spectromètre (11, 11a ou 11b) pour détecter à travers ladite fenêtre des spectres de photoluminescence émis par la pierre précieuse et émettant des signaux de données spectrales correspondants au niveau de sa sortie;
un filtre de blocage (16, 16a ou 16b) entre la fenêtre et le spectromètre, pour éliminer par filtrage le rayonnement à la longueur d'onde du rayonnement d'irradiation;
un processeur connecté à la sortie du spectromètre pour analyser les données spectrales du spectromètre;
un écran d'affichage (18) connecté au processeur pour afficher les informations concernant la pierre précieuse; et
une structure de support (1);
**caractérisé en ce que** le dispositif sert à indiquer si une pierre précieuse polie (4) est un diamant naturel n'ayant pas été soumis à un traitement par irradiation et n'ayant pas été soumis à un traitement à pression et à température élevées, le processeur et l'affichage (18) étant destinés à indiquer si la pierre précieuse est un diamant naturel n'ayant pas été soumis à un traitement par irradiation et n'ayant pas été soumis à une traitement à pression et à température élevées;
**en ce que** le récipient (2) sert à recevoir la pierre précieuse et le fluide cryogénique, la pierre précieuse étant ainsi directement immergée dans le fluide cryogénique, la fenêtre (5) étant agencée dans la partie inférieure du récipient, une facette de la pierre précieuse étant ainsi placée près de la fenêtre; et
**en ce que** la structure de support (1) supporte les composants ci-dessus et fournit un instrument autonome et indépendant, le laser (9 ou 10) étant accouplé à ladite fenêtre et le spectromètre (11, 11 a ou 11b) étant accouplé à ladite fenêtre.

2. Dispositif d'examen d'une pierre précieuse (4), comprenant:
un récipient à isolation thermique (2) pour contenir la pierre précieuse, et comportant une fenêtre (5);
un moyen pour refroidir le récipient par l'intermédiaire d'un fluide cryogénique;
un couvercle (6 ou 38) pour le récipient;
un laser (9 ou 10) pour irradier la pierre précieuse à travers ladite fenêtre;
un spectromètre (11, 11a ou 11b) pour détecter à travers ladite fenêtre des spectres de photoluminescence émis par la pierre précieuse et émettant des signaux de données spectrales correspondants au niveau de sa sortie;
un filtre de blocage (16, 16a ou 16b) entre la fenêtre et le spectromètre, pour éliminer par filtrage le rayonnement à la longueur d'onde du rayonnement d'irradiation;
un processeur connecté à la sortie du spectromètre pour analyser les données spectrales du spectromètre;
un écran d'affichage (18) connecté au processeur pour afficher les informations concernant la pierre précieuse; et
une structure de support (1);
**caractérisé en ce que** le dispositif sert à indiquer si une pierre précieuse polie (4) est un diamant naturel n'ayant pas été soumis à un traitement par irradiation, le processeur et l'affichage (18) étant destinés à indiquer si la pierre précieuse est un diamant naturel n'ayant pas été soumis à un traitement par irradiation;
**en ce que** le récipient (2) sert à recevoir la pierre précieuse et le fluide cryogénique, la pierre précieuse étant ainsi directement immergée dans le fluide cryogénique, la fenêtre (5) étant agencée dans la partie inférieure du récipient, une facette de la pierre précieuse étant ainsi placée près de la fenêtre; et
**en ce que** la structure de support (1) supporte les composants ci-dessus et fournit un instrument autonome et indépendant, le laser (9 ou 10) étant accouplé à ladite fenêtre et le spectromètre (11, 11a ou 11b) étant accouplé à ladite fenêtre.

3. Dispositif d'examen d'une pierre précieuse (4), comprenant:
un récipient à isolation thermique (2) pour contenir la pierre précieuse, et comportant une fenêtre (5);
un moyen pour refroidir le récipient par l'intermédiaire d'un fluide cryogénique;
un couvercle (6 ou 38) pour le récipient;
un laser (9 ou 10) pour irradier la pierre précieuse à travers ladite fenêtre;
un spectromètre (11, 11a ou 11 b) pour détecter à travers ladite fenêtre des spectres de photoluminescence émis par la pierre précieuse et émettant des signaux de données spectrales correspondants au niveau de sa sortie;
un filtre de blocage (16, 16a ou 16b) entre la fenêtre et le spectromètre, pour éliminer par filtrage le rayonnement à la longueur d'onde du rayonnement d'irradiation;
un processeur connecté à la sortie du spectromètre pour analyser les données spectrales du spectromètre;
un écran d'affichage (18) connecté au processeur pour afficher les informations concernant la pierre précieuse; et
une structure de support (1);
**caractérisé en ce que** le dispositif sert à indiquer si une pierre précieuse polie (4) est un diamant naturel n'ayant pas été soumis à un traitement à pression et température élevées, le processeur et l'affichage (18) étant destinés à indiquer si la pierre précieuse est un diamant naturel n'ayant pas été soumis à un traitement à pression et température élevées;
**en ce que** le récipient (2) sert à recevoir la pierre précieuse et le fluide cryogénique, la pierre précieuse étant ainsi directement immergée dans le fluide cryogénique, la fenêtre (5) étant agencée dans la partie inférieure du récipient, une facette de la pierre précieuse étant ainsi placée près de la fenêtre; et
**en ce que** la structure de support (1) supporte les composants ci-dessus et fournit un instrument autonome et indépendant, le laser (9 ou 10) étant accouplé à ladite fenêtre et le spectromètre (11, 11a ou 11b) étant accouplé à ladite fenêtre.

4. Dispositif selon l'une quelconque des revendications précédentes, dans lequel ledit laser (9) émet un rayonnement à environ 530 nm.

5. Dispositif selon l'une quelconque des revendications 1 à 3, dans lequel ledit laser (10) émet un rayonnement à une longueur d'onde comprise entre environ 630 et environ 700 nm.

6. Dispositif selon la revendication 5, dans lequel ledit laser (10) émet un rayonnement à environ 655 nm.

7. Dispositif selon l'une quelconque des revendications précédentes, dans lequel ledit laser ou lesdits lasers (9, 10) servent à irradier la pierre précieuse (4) avec un rayonnement ayant au moins deux longueurs d'onde différentes.

8. Dispositif selon la revendication 7, dans lequel les longueurs d'onde sont conformes à celles indiquées dans les revendications 4 et 5 ou 4 et 6.

9. Dispositif selon l'une quelconque des revendications précédentes, comprenant au moins deux dits lasers (9, 10), accouplés à ladite fenêtre (5) pour irradier la pierre précieuse avec des rayonnements respectifs de longueurs d'onde différentes.

10. Dispositif selon l'une quelconque des revendications précédentes, dans lequel ledit laser ou lesdits lasers (9, 10) sont des lasers compacts solides.

11. Dispositif selon l'une quelconque des revendications précédentes, dans lequel le spectromètre (11, 11a ou 11b) détecte la présence d'au moins une crête de luminescence spécifique.

12. Dispositif selon l'une quelconque des revendications 1 et 3 à 10, dans lequel le spectromètre (11, 11a ou 11b) détecte au moins une crête de luminescence pour indiquer ainsi si le diamant (4) est un diamant synthétique produit par synthèse à pression et à températures élevées.

13. Dispositif selon la revendication 12, dans lequel le spectromètre (11, 11a ou 11b) détecte des crêtes de luminescence à une ou plusieurs longueurs d'onde de 580,4 nm, 720 nm, 753 nm et 793 nm, pour indiquer ainsi si le diamant (4) est un diamant synthétique produit par synthèse à pression et à température élevées.

14. Dispositif selon l'une quelconque des revendications 1 et 3 à 13, dans lequel le spectromètre (11, 11a ou 11b) détecte la présence d'au moins deux crêtes de luminescence spécifiques, le processeur mettant en rapport les crêtes pour déterminer si le diamant a été soumis à un traitement à pression et à température élevées.

15. Dispositif selon la revendication 14, dans lequel lesdites au moins deux crêtes sont 575 nm et 637 nm.

16. Dispositif selon l'une quelconque des revendications 11 à 15, dans lequel le spectromètre (11, 11a ou 11b) détecte une crête de luminescence à 737 nm pour déterminer ainsi si le diamant (4) est synthétique.

17. Dispositif selon l'une quelconque des revendications 11 à 16, dans lequel le spectromètre (11, 11a ou 11b) détecte une crête de luminescence à 741 nm pour déterminer ainsi si le diamant (4) a été soumis à un traitement par irradiation.

18. Dispositif selon l'une quelconque des revendications 11 à 17, dans lequel le spectromètre (11, 11a ou 11b) détecte une crête de luminescence à 987 nm pour déterminer ainsi si le diamant (4) a été soumis à un traitement à pression et à température élevées.

19. Dispositif selon l'une quelconque des revendications précédentes, dans lequel le spectromètre (11, 11a ou 11b) émet un signal en fonction de l'amplitude d'une crête Raman d'un diamant dans les spectres de photoluminescence, la sortie du processeur étant normalisée en fonction de l'amplitude de la crête de Raman.

20. Dispositif selon l'une quelconque des revendications précédentes, comprenant au moins deux dits spectromètres (11, 11a ou 11b), accouplés tous les deux à ladite fenêtre (5).

21. Dispositif selon l'une quelconque des revendications précédentes, dans lequel le ou chaque spectromètre (11, 11a ou 11b) est sensible dans l'intervalle allant d'environ 550 à environ 1000 nm.

22. Dispositif selon l'une quelconque des revendications précédentes, dans lequel le ou chaque spectromètre (11, 11a ou 11b) est un spectromètre CCD compact.

23. Dispositif selon l'une quelconque des revendications précédentes, dans lequel des câbles à fibres optiques (12, 13, 14a, 14b) assurent l'accouplement physique du (des) laser(s) (9, 10) et du (des) spectromètres(s) (11, 11a ou 11b) à ladite fenêtre (5).

24. Dispositif selon la revendication 23, dans lequel les extrémités des câbles à fibres optiques (12, 13, 14a, 14b) forment ladite fenêtre (5).

25. Dispositif selon les revendications 23 ou 24, dans lequel, au voisinage de ladite fenêtre (5), un premier câble à fibres optiques (13, 14a, 14b) est entouré par des fibres individuelles d'un câble à fibres optiques additionnel (12) formé par un faisceau de fibres individuelles.

26. Dispositif selon les revendications 23 ou 24, dans lequel le spectromètre (11, 11a ou 11b) est connecté à ladite fenêtre (5) par un premier câble à fibres optiques (14a ou 14b), entouré au voisinage de ladite fenêtre par des fibres individuelles d'un câble à fibres optiques additionnel (12), s'étendant à partir d'un dit laser (9 ou 10), ledit câble à fibres optiques additionnel étant composé d'un faisceau de fibres individuelles.

27. Dispositif selon les revendications 25 ou 26, dans lequel la surface de section transversale dudit premier câble à fibres optiques (13, 14a ou 14b) est nettement inférieure à celle dudit câble à fibres optiques additionnel (12).

28. Dispositif selon l'une quelconque des revendications précédentes, dans lequel ladite structure de support (1) comprend un seul boîtier renfermant tous lesdits composants, à l'exception du récipient à isolation thermique (4), de l'écran d'affichage (18) et d'au moins un élément de commande manuelle (19 ou 20), le récipient (4) étant reçu dans la partie supérieure du boîtier.

29. Dispositif selon l'une quelconque des revendications précédentes, comportant en outre une partie (8) pour retenir la pierre précieuse (4) contre ladite fenêtre (5).

30. Dispositif selon la revendication 29, dans lequel le couvercle du récipient (6 ou 38) comporte une partie (38) pour recouvrir la partie supérieure du récipient (2) et une saillie s'étendant vers le bas (8), comportant un évidement dans sa partie inférieure, destiné à l'engagement dans la pierre précieuse (4) et à sa retenue contre ladite fenêtre (5).

31. Dispositif selon la revendication 30, dans lequel la saillie s'étendant vers le bas (8) est un tube creux.

32. Dispositif selon l'une quelconque des revendications précédentes, ayant une hauteur inférieure à environ 150 mm.

33. Dispositif selon la revendication 32, ayant une hauteur d'environ 100 mm.

34. Dispositif selon l'une quelconque des revendications précédentes, ayant une longueur de vue en plan inférieure à environ 550 mm.

35. Dispositif selon la revendication 34, ayant une hauteur d'environ 150 mm ou moins.

36. Dispositif selon l'une quelconque des revendications précédentes, ayant une profondeur de récipient inférieure à environ 50 mm.

37. Dispositif selon la revendication 36, ayant une profondeur de récipient inférieure à environ 30 mm.

38. Dispositif selon l'une quelconque des revendications précédentes, ayant une surface de vue en plan du récipient inférieure à environ 5000 mm².

39. Dispositif selon la revendication 38, ayant une surface de vue en plan du récipient inférieure à environ 400 mm².

40. Dispositif selon l'une quelconque des revendications précédentes, dans lequel la taille de la fenêtre (5) est nettement inférieure à la taille de la partie inférieure du récipient à isolation thermique (2).

41. Dispositif selon l'une quelconque des revendications précédentes, dans lequel le récipient (2) est destiné à recevoir de l'azote liquide comme fluide cryogénique.

42. Procédé d'examen d'une pierre précieuse (4), comprenant les étapes d'irradiation de la pierre précieuse par un laser (9 ou 10) et de détection des spectres de photoluminescence émis par la pierre précieuse et d'affichage sur un écran d'affichage (18) des informations concernant la pierre précieuse, par l'intermédiaire d'un dispositif comprenant une structure de support (1) supportant au moins les composants ci-dessous: un récipient à isolation thermique (2) destiné à contenir la pierre précieuse et comportant au moins une fenêtre (5), un moyen pour refroidir le récipient par l'intermédiaire d'un fluide cryogénique, un couvercle (6 ou 38) pour le récipient, un laser (9 ou 10) pour irradier la pierre précieuse à travers ladite fenêtre, un spectromètre (11, 11a ou 11 b) pour détecter à travers ladite fenêtre les spectres de photoluminescence émis par la pierre précieuse et transmettant des signaux de données spectrales correspondants au niveau de sa sortie, un filtre de blocage (16, 16a, ou 16b) entre la fenêtre et le spectromètre, pour éliminer par filtrage le rayonnement à la longueur d'onde du rayonnement d'irradiation; un processeur connecté à la sortie du spectromètre pour analyser les données spectrales du spectromètre et un écran d'affichage (18) connecté au processeur pour afficher les informations concernant la pierre précieuse;
**caractérisé en ce que** le procédé sert à indiquer si une pierre précieuse polie (4) est un diamant naturel n'ayant pas été soumis à un traitement par irradiation et n'ayant pas été soumis à un traitement à pression et à température élevées, le processeur étant destiné à indiquer si la pierre précieuse est un diamant naturel n'ayant pas été soumis à un traitement par irradiation et n'ayant pas été soumis à un traitement à pression et à température élevées et l'affichage est destiné à afficher de l'information pour indiquer si la pierre précieuse est un diamant naturel n'ayant pas été soumis à un traitement par irradiation et n'ayant pas été soumis à un traitement à pression et à température élevées;
**en ce que** la pierre précieuse et le fluide cryogénique sont placés dans le récipient (2), la pierre précieuse étant ainsi directement immergée dans le fluide cryogénique, une facette de la pierre précieuse étant ainsi placée près de la fenêtre (5); et
**en ce que** la structure de support (1) supporte les composants ci-dessus et le dispositif est un instrument autonome et indépendant, le laser (9 ou 10) étant accouplé à ladite fenêtre et le spectromètre (11, 11a ou 11b) étant accouplé à ladite fenêtre.

43. Procédé d'examen d'une pierre précieuse (4), comprenant les étapes d'irradiation de la pierre précieuse par un laser (9 ou 10) et de détection des spectres de photoluminescence émis par la pierre précieuse et d'affichage sur un écran d'affichage (18) des informations concernant la pierre précieuse, par l'intermédiaire d'un dispositif comprenant une structure de support (1) supportant au moins les composants ci-dessous: un récipient à isolation thermique (2) destiné à contenir la pierre précieuse et comportant une fenêtre (5), un moyen pour refroidir le récipient par l'intermédiaire d'un fluide cryogénique, un couvercle (6 ou 38) pour le récipient, un laser (9 ou 10) pour irradier la pierre précieuse à travers ladite fenêtre, un spectromètre (11, 11a ou 11b) pour détecter à travers ladite fenêtre les spectres de photoluminescence émis par la pierre précieuse et transmettant des signaux de données spectrales correspondants au niveau de sa sortie, un filtre de blocage (16, 16a, ou 16b) entre la fenêtre et le spectromètre, pour éliminer par filtrage le rayonnement à la longueur d'onde du rayonnement d'irradiation; un processeur connecté à la sortie du spectromètre pour analyser les données spectrales du spectromètre et un écran d'affichage (18) connecté au processeur pour afficher les informations concernant la pierre précieuse;
**caractérisé en ce que** le procédé sert à indiquer si une pierre précieuse polie (4) est un diamant naturel n'ayant pas été soumis à un traitement par irradiation, le processeur étant destiné à indiquer si la pierre précieuse est un diamant naturel n'ayant pas été soumis à un traitement par irradiation, et l'écran d'affichage servant à afficher des informations indiquant si la pierre précieuse polie est un diamant naturel n'ayant pas été soumis à un traitement par irradiation;
**en ce que** la pierre précieuse et le fluide cryogénique sont placés dans le récipient (2), la pierre précieuse étant ainsi directement immergée dans le fluide cryogénique, une facette de la pierre précieuse étant ainsi placée près de la fenêtre; et
**en ce que** la structure de support (1) supporte les composants ci-dessus et le dispositif est un instrument autonome et indépendant, le laser (9 ou 10) étant accouplé à ladite fenêtre et le spectromètre (11, 11a ou 11b) étant accouplé à ladite fenêtre.

44. Procédé d'examen d'une pierre précieuse (4), comprenant les étapes d'irradiation de la pierre précieuse par un laser (9 ou 10) et de détection des spectres de photoluminescence émis par la pierre précieuse et d'affichage sur un écran d'affichage (18) des informations concernant la pierre précieuse, par l'intermédiaire d'un dispositif comprenant une structure de support (1) supportant au moins les composants ci-dessous: un récipient à isolation thermique (2) destiné à contenir la pierre précieuse et comportant une fenêtre (5), un moyen pour refroidir le récipient par l'intermédiaire d'un fluide cryogénique, un couvercle (6 ou 38) pour le récipient, un laser (9 ou 10) pour irradier la pierre précieuse à travers ladite fenêtre, un spectromètre (11, 11a ou 11 b) pour détecter à travers ladite fenêtre les spectres de photoluminescence émis par la pierre précieuse et transmettant des signaux de données spectrales correspondants au niveau de sa sortie, un filtre de blocage (16, 16a, ou 16b) entre la fenêtre et le spectromètre, pour éliminer par filtrage le rayonnement à la longueur d'onde du rayonnement d'irradiation; un processeur connecté à la sortie du spectromètre pour analyser les données spectrales du spectromètre et un écran d'affichage (18) connecté au processeur pour afficher les informations concernant la pierre précieuse;
**caractérisé en ce que** le procédé sert à indiquer si une pierre précieuse polie (4) est un diamant naturel n'ayant pas été soumis à un traitement à pression et température élevées, le processeur étant destiné à indiquer si la pierre précieuse est un diamant naturel n'ayant pas été soumis à un traitement à pression et à température élevées, et l'affichage servant à afficher des informations indiquant si la pierre précieuse polie est un diamant naturel n'ayant pas été soumis à un traitement à pression et température élevées;
**en ce que** la pierre précieuse et le fluide cryogénique sont placés dans le récipient (2), la pierre précieuse étant ainsi directement immergée dans le fluide cryogénique, une facette de la pierre précieuse étant ainsi placée près de la fenêtre; et
**en ce que** la structure de support (1) supporte les composants ci-dessus et le dispositif est un instrument autonome et indépendant, le laser (9 ou 10) étant accouplé à ladite fenêtre et le spectromètre (11, 11a ou 11b) étant accouplé à ladite fenêtre.

45. Procédé selon l'une quelconque des revendications 42 à 44, dans lequel des pierres précieuses polies sont examinées en vue de rejeter toutes les pierres synthétiques ou qui ne sont pas des diamants naturels de type II, les pierres non rejetées étant testées par l'intermédiaire dudit dispositif.

46. Procédé selon l'une quelconque des revendications 42 à 45, dans lequel le fluide cryogénique est de l'azote liquide.

47. Procédé selon l'une quelconque des revendications 42 à 46, dans lequel le dispositif est conforme à l'une quelconque des revendications 4 à 40.
